# EUROPEAN PATENT APPLICATION

(11) **EP 1 739 289 A1**
(43) Date of publication of application: **03.01.2007**
(21) Application number: 05720311.9
(22) Date of filing: 09.03.2005
(51) Int. Cl.: F01N 3/24, B01D 53/94, F01N 3/08, F02D 41/04

(54) **EXHAUST PURIFYING DEVICE FOR INTERNAL COMBUSTION ENGINE**

(30) Priority: 19.04.2004 JP 2004123433; 26.07.2004 JP 2004216693
(71) Applicant: HONDA MOTOR CO., Ltd., Tokyo 107-8556 (JP)
(72) Inventor: Morita, Tomoko, Honda R & D Co., Ltd., Wako-shi, Saitama 3510113 (JP); Suzuki, Norio, Honda R & D Co., Ltd., Wako-shi, Saitama 3510113 (JP); Wada, Katsuji, Honda R & D Co., Ltd., Wako-shi, Saitama 3510113 (JP); Ohno, Hiroshi, Honda R & D Co., Ltd., Wako-shi, Saitama 3510113 (JP); Satoh, Naohiro, Honda R & D Co., Ltd., Wako-shi, Saitama 3510113 (JP)
(74) Representative: Prechtel, Jörg
(86) International application number: PCT/JP2005/004039
(87) International publication number: WO 2005/103461

(57) **Abstract**

A NOx removing device 4 having NOx absorbing capacity and ammonia retaining capacity is provided in an exhaust pipe 2 of an internal combustion engine 1. A reforming catalyst 3 is disposed upstream of the NOx removing device 4. The reforming catalyst 3 generates hydrogen and carbon monoxide by the steam reforming reaction, when the exhaust gases are in the reducing state. Hydrogen and carbon monoxide generated by the reforming catalyst 3 are supplied to the NOx removing device 4, and contribute to generation of ammonia. The generated ammonia is retained in the NOx removing device 4 and reduces NOx in exhaust gases when the exhaust gases are in the oxidizing state.

## Description

### Technical Field

The present invention relates to an exhaust gas purifying apparatus for an internal combustion engine, and particularly to an exhaust gas purifying apparatus including a NOx removing device which removes NOx in the exhaust gases.

### Background Art

A NOx removing device which absorbs NOx in exhaust gases when the exhaust gases are in an oxidizing state (when the concentration of oxygen in exhaust gases is relatively high compared with the concentration of reducing components (HC, CO)), and reduces absorbed NOx when the exhaust gases are in a reducing state (when the concentration of reducing components in the exhaust gases are relatively high compared with the concentration of oxygen), is conventionally known. Further, the patent document 1 (shown below) discloses an exhaust gas purifying apparatus containing a hydrogen generating catalyst which generates hydrogen when the exhaust gases are in the reducing state, wherein the hydrogen generating catalyst is disposed upstream of the NOx removing device.

The hydrogen generating catalyst generates hydrogen by reacting hydrocarbon with steam in the exhaust gases (by the steam-reforming reaction). The NOx removing device reduces NOx absorbed in the oxidizing state with the generated hydrogen. The NOx removing device absorbs SOx as well as NOx in the exhaust gases. The absorbed SOx can also be reduced comparatively easily by supplying hydrogen having strong reducing power.

Patent Document 1: Japanese Patent Laid-open No. 2003-10646

### Disclosure of Invention

### Problems to be Solved by the Invention

In the NOx removing device, ammonia is generated in the reducing state. Therefore, an exhaust gas purifying apparatus which retains ammonia generated in the reducing state, and reduces NOx with the retained ammonia when the exhaust gases are in the oxidizing state, is being developed. In the apparatus shown in the patent document 1, the reducing action in the oxidizing atmosphere by the ammonia generated and retained in the reducing atmosphere is not taken into consideration. Therefore, there remains a room for improvement in more effectively utilizing the hydrogen generated by the steam-reforming reaction.

The present invention is made contemplating this point, and an object of the present invention is to provide an exhaust gas purifying apparatus which can effectively utilize the hydrogen generated from the hydrocarbon in exhaust gases, and efficiently suppress NOx emission.

### Means for Solving the Problems

In order to attain the above object, the present invention provides an exhaust purifying apparatus for an internal combustion engine (1), characterized by having NOx removing means (4) provided in an exhaust system of the engine, reforming means (3) disposed upstream of the NOx removing means (4), and fuel adding means(6). The NOx removing means adsorbs NOx in exhaust gases from the engine when the exhaust gases are in an oxidizing state, reduces adsorbed NOx to generate ammonia, and retains the generated ammonia. The reforming means reforms reducing components to hydrogen when the exhaust gases are in a reducing state. The fuel adding means adds fuel to the exhaust gases which flow into the reforming means (3).

According to this configuration, hydrogen is generated by the reforming means and supplied to the NOx removing means. In the NOx removing means, the hydrogen supplied from the reforming means contributes to generation of ammonia, and an ammonia generation amount increases when the exhaust gases are in the reducing state. Therefore, an amount of NOx which can be reduced in the oxidizing state increases, to thereby reduce execution frequency of the fuel addition (air-fuel ratio enrichment) for reducing NOx absorbed in the NOx removing device. Consequently, fuel consumption rate can be improved.

Preferably, the reforming means is a reforming catalyst, a partial oxidation catalyst, or a three-way catalyst. Further, a partial oxidation catalyst to which rhodium is added may be used as the reforming means.

### Brief Description of Drawings

[FIG. 1] FIG. 1 is a schematic diagram showing a configuration of an internal combustion engine and an exhaust gas purifying apparatus therefor according to one embodiment of the present invention.
[FIG. 2] FIG. 2 is a figure for illustrating the NOx removing device shown in FIG. 1.
[FIG. 3] FIG. 3 is a figure for illustrating the effect of disposing the reforming catalyst upstream of a NOx removing device.
[FIG. 4] FIG. 4 is a schematic diagram showing a first modification of the configuration shown in FIG. 1.
[FIG. 5] FIG. 5 is a schematic diagram showing a second modification of the configuration shown in FIG. 1.
[FIG. 6] FIG. 6 shows a relationship between a catalyst temperature and a NOx removing rate of the NOx removing device.
[FIG. 7] FIG. 7 is a timechart for explaining a change in temperature of the catalyst caused by the engine operation.

### Description of Reference Numerals

- 1: Internal Combustion Engine
- 2: Exhaust Pipe
- 3: Reforming Catalyst (reforming means)
- 3a: Partial Oxidation Catalyst (reforming means)
- 3b: Three-way Catalyst (reforming means)
- 4: NOx Removing Device (NOx removing means)
- 6: Fuel Injection Valve (fuel adding means)
- 7: Electronic Control Unit (fuel adding means)

### Best Mode for Carrying Out the Invention

Preferred embodiments of the present invention will now be described with reference to the drawings.

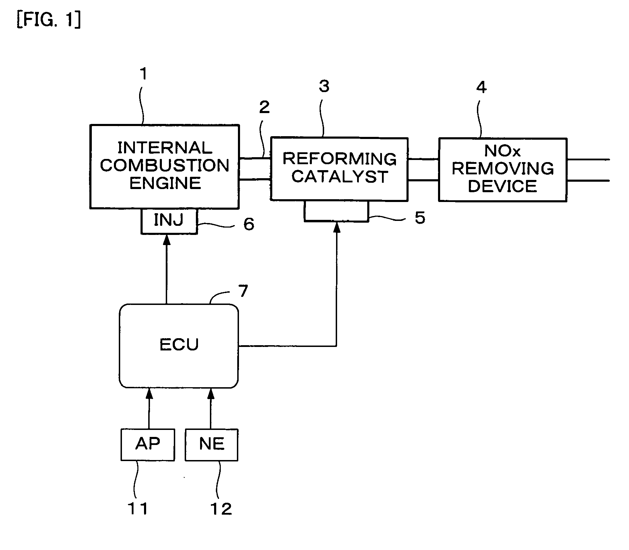

FIG. 1 is a schematic diagram showing a whole configuration of an internal combustion engine (hereinafter referred to as "engine") and its exhaust gas purifying apparatus according to one embodiment of the present invention. The engine 1 is a diesel engine in which fuel is directly injected into cylinders, and each cylinder is provided with a fuel injection valve 6. The fuel injection valve 6 is electrically connected to an electronic control unit (hereinafter referred to as "ECU") 7, and a valve opening timing and a valve opening period of the fuel injection valve 6 are controlled by the ECU 7.

An exhaust pipe 2 of the engine 1 is provided with a NOx removing device 4 and a reforming catalyst 13. The reforming catalyst 3 is provided upstream of the NOx removing device 4. The reforming catalyst 3 generates hydrogen (H₂) and carbon monoxide (CO) by the steam reforming reaction shown by the following chemical equation (1), when the exhaust gases are in the reducing state. Further, a part of generated carbon monoxide reacts with steam (water gas reaction), to generate hydrogen and carbon dioxide (CO₂), as shown by the following equation (2).

CnHm + nH₂O → nCO + (n + m/2)H₂ (1)

CO + H₂O → CO₂ + H₂ (2)

The reforming catalyst 3 consists of a carrier and nickel (Ni) or platinum group metal (ruthenium (Ru), rhodium (Rh), osmium (Os), or platinum (Pt)) carried by the carrier. The carrier is made of calcium oxide (CaO) and alumina (Al₂O₃). The reforming catalyst 3 is provided with a heater 5 connected to the ECU 7. When the temperature of the reforming catalyst 3 is low, such as immediately after starting of the engine 1, the ECU 7 supplies electric current to the heater 5, and heats the reforming catalyst 3.

The NOx removing device 4 includes platinum (Pt) as a catalyst, ceria having NOx adsorbing capacity, and zeolite for retaining ammonia (NH₃) in the exhaust gases as ammonium ion (NH₄⁺). The platinum is carried by an alumina (Al₂O₃) carrier.

When the amount of NOx adsorbed by the NOx removing device 4 reaches the limit of its NOx adsorbing capacity, i.e., the maximum NOx adsorbing amount, the NOx removing device 4 cannot adsorb any more NOx. Accordingly, to timely reduce the adsorbed NOx, reducing components are supplied to the NOx removing device 4. In this embodiment, supply of reducing components is performed by setting an air-fuel ratio of air-fuel mixture in the combustion chamber on a rich side with respect to the stoichiometric ratio with increment of an amount of fuel injected from the fuel injection valve 6 and reduction of an intake air amount using a throttle valve (not shown). That is, supply of reducing components is performed by enriching the air-fuel ratio. By enrichment of the air-fuel ratio, a concentration of reducing components in the exhaust gases which flow into the NOx removing device 4 becomes higher than a concentration of oxygen, and reducing components are supplied to the NOx removing device 4.

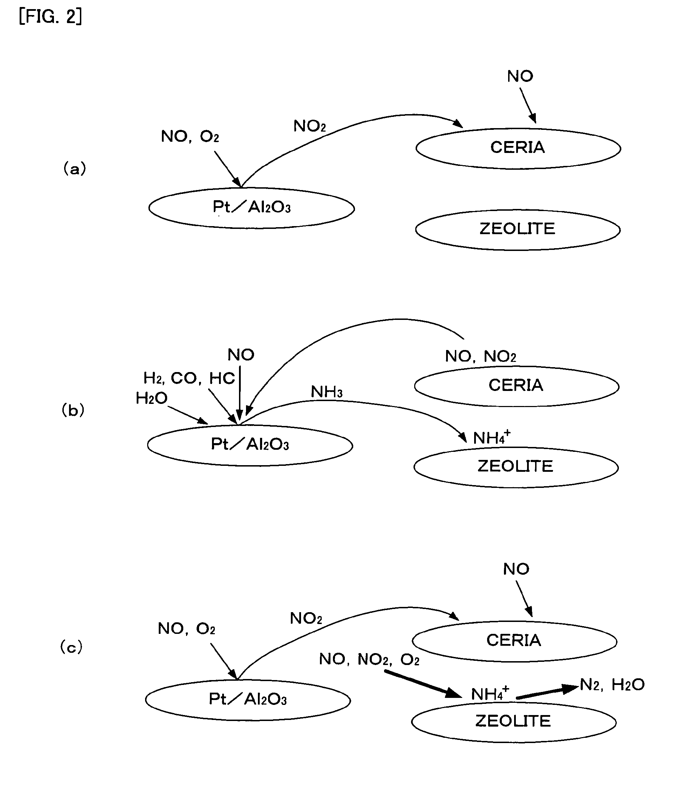

FIG. 2 is a figure for illustrating the NOx removal in the NOx removing device 4. First, in the initial condition, when the air-fuel ratio of the air-fuel mixture which burns in the engine 1, is set to a value on the lean side with respect to the stoichiometric ratio, i.e., the so-called lean burn operation is performed, the concentration of reducing components in the exhaust gases which flow into the NOx removing device 4 becomes lower than the concentration of oxygen (the exhaust gases turn into the oxidizing state) and nitric oxide (NO) and oxygen (O₂) in the exhaust gases react by the action of the catalyst, to be adsorbed by the ceria as nitrogen dioxide (NO₂), as shown in FIG. 2 (a). Further, the nitric oxide, which has not reacted with oxygen, is also adsorbed by the ceria.

Next, when the concentration of reducing components in the exhaust gases is made higher than the concentration of oxygen by enriching the air-fuel ratio, the exhaust gases turn into the reducing state. Then hydrogen and carbon monoxide are generated by the steam reforming reaction like in the reforming catalyst 3. Further, carbon dioxide and hydrogen are generated from carbon monoxide and water by the water gas reaction.

Further, as shown in FIG. 2 (b), NOx contained in the exhaust gases and NOx (NO, NO₂) adsorbed by the ceria (and platinum) react, by the action of the catalyst, with the hydrogen generated by the reforming catalyst 3 and the hydrogen generated in the NOx removing device 4, to generate ammonia (NH₃) and water. These reactions are expressed by the following chemical equations (3) and (4).

2NO₂ + 7H₂ → 2NH₃ + 4H₂O (3)

2NO + 5H₂ → 2NH₃ + 2H₂O (4)

The generated ammonia is adsorbed by the zeolite in the form of ammonium ion (NH₄⁺).

Next, when the air-fuel ratio is set to a value on the lean side with respect to the stoichiometric ratio to perform the lean burn operation, and the concentration of reducing components in the exhaust gases which flow into the NOx removing device 4 is set to a value on the lower side of the concentration of oxygen, the exhaust gases turn into the oxidizing state. Then, NOx is adsorbed by the ceria as shown in FIG. 2 (c), like FIG. 2 (a). Further, under the condition where ammonium ions are adsorbed by the zeolite, NOx and oxygen in the exhaust gases react with ammonia to generate nitrogen (N₂), as expressed by the following equations (5) and (6).

4NH₃ + 4NO + O₂ → 4N₂ + 6H₂O (5)

2NH₃ + NO + NO₂ → 2N₂ + 3H₂O (6)

As described above, according to the NOx removing device 4, the ammonia generated when supplying reducing components is adsorbed by the zeolite, and the adsorbed ammonia reacts with NOx during the lean burn operation. Accordingly, NOx can be efficiently removed.

An accelerator sensor 11 for detecting an operation amount AP of an accelerator pedal of the vehicle driven by the engine 1 (hereinafter referred to as "accelerator operation amount AP") and an engine rotational speed sensor 12 for detecting an engine rotational speed NE are connected to the ECU 7. The detection signals of these sensors are supplied to the ECU 7.

The ECU 7 calculates a fuel injection period which is a valve opening period of the fuel injection valve 6 and an execution timing of the fuel injection according to the detection signals of these sensors. Further, the ECU 7 performs a drive control of the fuel injection valve 6 according to the calculation result. Specifically, an amount of NOx absorbed by the NOx removing device 4 is estimated, and enrichment of the air-fuel ratio for making the exhaust gases turn into the reducing state is performed when the estimated amount of absorbed NOx reaches a predetermined threshold value.

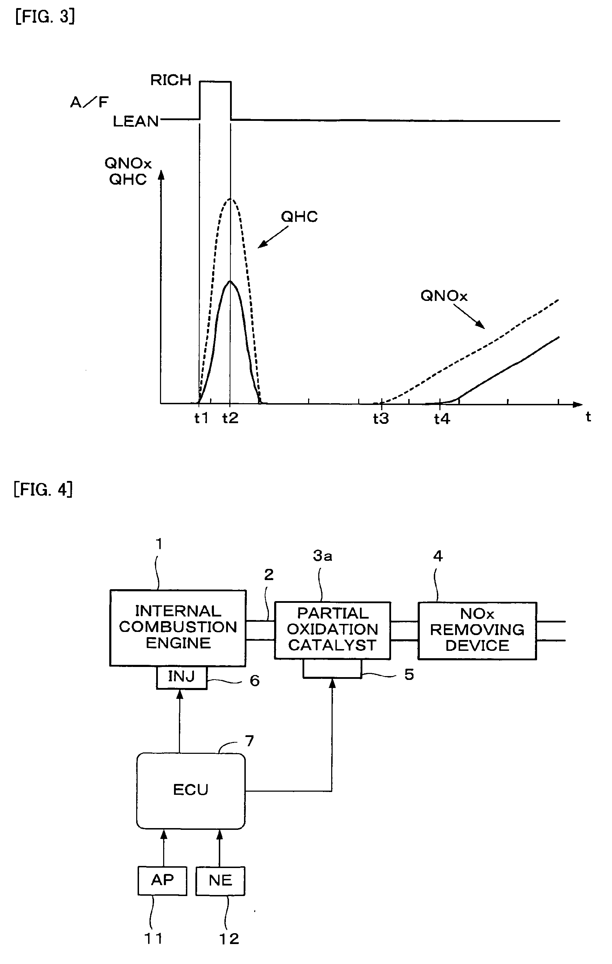

FIG. 3 is a time chart for explaining the relationship between the air-fuel ratio control, and a hydrocarbon amount QHC and a NOx amount QNOx in exhaust gases. In FIG. 3, the solid line corresponds to this embodiment, and the dashed line corresponds to an example where the reforming catalyst 3 is not provided. Further, the hydrocarbon amount QHC indicates an amount of hydrocarbon emitted from the engine 1 (an amount of hydrocarbon which flows into the reforming catalyst 3), and the NOx amount QNOx indicates an amount of NOx emitted to the downstream side of the NOx removing device 4, i.e., a NOx amount after the amount of NOx absorbed in the NOx removing device 4 has become saturated.

Normally, the air-fuel ratio is set to a value on the lean side with respect to the stoichiometric ratio to perform the lean burn operation. An enrichment of the air-fuel ratio is started from the time t1 the estimated amount of absorbed NOx reaches a predetermined threshold value. The enrichment ends at time t2. During the enrichment, the hydrocarbon amount QHC rapidly increases and the exhaust gases turn into the reducing state. In this embodiment, since hydrogen and carbon monoxide are generated by the reforming catalyst 3 and are supplied to the NOx removing device 4, the degree of enrichment can be made smaller to reduce the hydrocarbon amount QHC, compared with the example where the reforming catalyst 3 is not provided. Further, the amount of ammonia generated and retained by the NOx removing device 4 in the reducing state is increased by the hydrogen and carbon monoxide which are generated by the reforming catalyst 3, and the amount of NOx reduced during the lean burn operation increases. Therefore, the time the amount of NOx absorbed by the NOx removing device 4 has become saturated is delayed from time t3 to time t4, to thereby make it possible to lower the execution frequency of enrichment of the air-fuel ratio for reducing NOx.

In this embodiment, as described above, since the reforming catalyst is disposed upstream of the NOx removing device 4, the amount of hydrogen and carbon monoxide which flow into the NOx removing device 4 increases, and the amount of ammonia generated in the NOx removing device 4 can be increased, when the exhaust gases are in the reducing state. Accordingly, the degree of the air-fuel ratio enrichment can be made smaller compared with the conventional system. Further, since the amount of generated and retained ammonia increases, the amount of NOx reduced by ammonia during the lean burn operation increases, and the execution frequency of the air-fuel ratio enrichment for reducing NOx absorbed by the NOx removing device 4 can be reduced. Consequently, the fuel consumption rate can be improved compared with the conventional system.

In this embodiment, the NOx removing device 4 corresponds to the NOx removing means, and the reforming catalyst 3 corresponds to the reforming means. Further, the fuel injection valve 6 and the ECU 7 constitute the fuel adding means. Specifically, increasing the fuel injection amount in the air-fuel ratio enrichment corresponds to the fuel adding means.

### Modification 1

In the above-described embodiment, the reforming catalyst 3 constitutes the reforming means. Alternatively, a partial oxidation catalyst 3a instead of the reforming catalyst 3 may constitute the reforming means, as shown in FIG. 4.

The partial oxidation catalyst 3a, for example, consists of a carrier made of alumina (Al₂O₃) and palladium Pd or platinum Pt carried by the carrier. In the partial oxidation catalyst 3a, carbon monoxide CO and hydrogen H₂ are generated by the partial oxidation reaction shown in the following equation (1a), and further a part of generated carbon monoxide reacts with steam by the water gas reaction shown in the above-described equation (2), to generate carbon dioxide and hydrogen, when the exhaust gases are in the reducing state.

CnHm + (n/2)H₂O → nCO + (m/2)H₂ (1a)

Hydrogen and carbon monoxide are generated by the partial oxidation catalyst 3a like the reforming catalyst 3 described and supplied to the NOx removing device 4. Accordingly, the amount of generated ammonia can be increased when the exhaust gases are in the reducing state.

### Modification 2

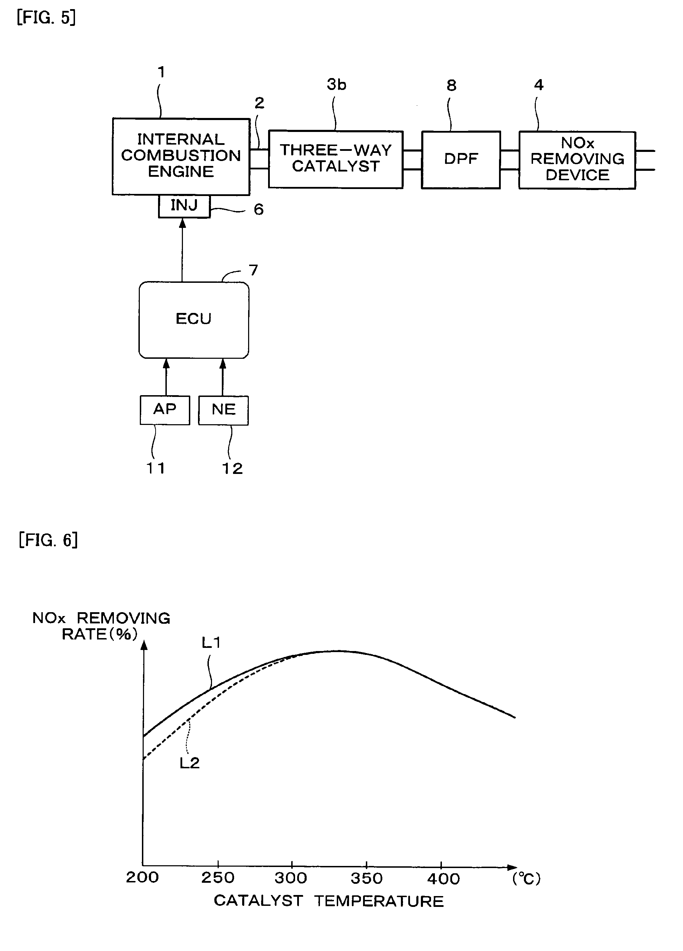

As shown in FIG. 5, a three-way catalyst 3b may be used as the reforming means. In the configuration shown in FIG. 5, a particulate filter (Diesel Particulate Filter) 8 is further provided between the three-way catalyst 3b and the NOx removing device 4. The particulate filter 8 traps soot which is the particulate mainly consisting of carbon (C) in the exhaust gases.

The three-way catalyst 3b consists of a carrier made of alumina and rhodium Rh and ceria carried by the carrier. In addition to rhodium Rh, precious metals such as platinum Pt and/or palladium Pd may be carried by the carrier. Ceria functions as adsorbent which adsorbs oxygen (O₂). Specifically, ceria adsorbs oxygen in the oxidizing state and desorbs oxygen in the reducing state.

In the three-way catalyst 3b, like the partial oxidation catalyst described above, hydrogen and carbon monoxide are generated by the partial oxidation reaction (equation (1a)) and the water gas reaction (equation (2)), when the exhaust gases are in the reducing state. The generated hydrogen and carbon monoxide are supplied to the NOx removing device 4, and the amount of ammonia generated when the exhaust gases are in the reducing state, can be increased.

When compared with the partial oxidation catalyst 3a, the water gas reaction rate of the three-way catalyst 3b is higher than that of the partial oxidation catalyst 3a (about 2 times higher) in the state where the temperature is comparatively low (for example, 200 degrees centigrade). Accordingly, the amount of hydrogen generated in the reducing state increases. Consequently, the NOx removing rate at the downstream side of the NOx removing device 4 can be improved especially in the low temperature state. FIG. 6 is a graph showing a relationship between the temperature of the catalyst and the NOx removing rate. The solid line L1 corresponds to the case where the three-way catalyst 3b is used. The dashed line L2 shows a characteristic of the case where the partial oxidation catalyst 3a used in the configuration shown FIG. 5, for comparison. As apparent from FIG. 6, the NOx removing rate can be improved in the range of temperatures lower than 300 degrees centigrade by using the three-way catalyst 3b.

Further, when the air-fuel ratio is enriched and the exhaust gases are in the reducing state, hydrocarbon and carbon monoxide in the three-way catalyst 3b burn with the oxygen desorbed from the ceria at the same time the NOx reducing reaction is promoted by Rhodium Rh. Accordingly, the calorific power generated in three-way catalyst 3b becomes large. Therefore, heating up of the three-way catalyst 3b itself and the NOx removing device 4 disposed downstream of the three-way catalyst 3b can be accelerated immediately after the cold start of the engine.

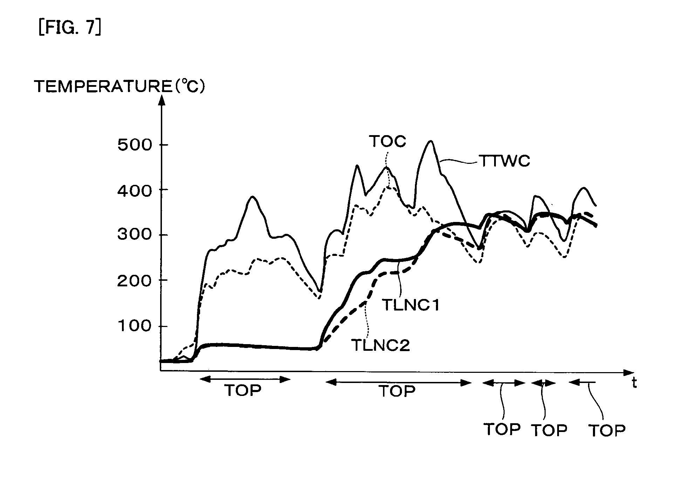

FIG. 7 is a time chart which shows changes in temperatures when the engine 1 is operated intermittently after the cold start (the periods TOP shown in FIG. 7 correspond to the engine operating periods). The solid line in FIG. 7 corresponds to the case where the three-way catalyst 3b is used, and the dashed line corresponds to the case where the partial oxidation catalyst 3a is used instead of the three-way catalyst 3b. Further, the thin solid line indicates changes in a temperature TTWC of the three-way catalyst 3b, and the thick solid line indicates changes in a temperature TLNC1 of the corresponding NOx removing device 4. Further, the thin dashed line indicates changes in a temperature TOC of the partial oxidation catalyst 3a, and the thick dashed line indicates changes in a temperature TLNC2 of the corresponding NOx removing device 4.

As apparent from this figure, the temperature of the three-way catalyst 3b rises faster than that of the partial oxidation catalyst 3a, and the temperature of the NOx removing device 4 also rises faster when using the three-way catalyst 3b. Consequently, the NOx removal rate in the process where the engine temperature is rising can be improved.

### Other modifications

The above-described advantages brought by using the three-way catalyst 3a, i.e., the improvement in the water gas reaction rate and the increase in the calorific power, are obtained mainly by using Rhodium Rh as the catalyst. Therefore, the catalyst obtained by adding Rhodium Rh to the partial oxidation catalyst 3a may be used in the modification 1.

Further, in the above-described embodiment, the fuel addition is performed by increasing an amount of the main fuel injection, when one main injection per cylinder is performed by the fuel injection valve 6. Alternatively, the fuel addition may be performed by executing one or more post injection (i.e., a supplemental fuel injection executed after the main injection). Alternatively, a mechanism for directly supplying fuel to the exhaust pipe 2 may be provided as the fuel adding means.

Further, in the above-described embodiment, ceria is used as NOx adsorbent. Alternatively, other materials which adsorb or absorb NOx may be used instead of ceria.

### Industrial Applicability

The present invention is applicable not only to the exhaust gas purification of the diesel internal combustion engine described above, but to the exhaust gas purification of a gasoline internal combustion engine. Further, the present invention can be applied also to exhaust gas purification of a watercraft propulsion engine, such as an outboard engine having a vertically extending crankshaft.

## Claims

1. An exhaust gas purifying apparatus for an internal combustion engine having:
NOx removing means provided in an exhaust system of said engine, for adsorbing NOx in exhaust gases from said engine when exhaust gases are in an oxidizing state, said NOx removing means reducing the adsorbed NOx to generate ammonia and retaining the generated ammonia when the exhaust gases are in a reducing state;
reforming means provided upstream of said NOx removing means, for reforming reducing components in the exhaust gases to hydrogen when the exhaust gases are in the reducing state; and
fuel adding means for adding fuel to the exhaust gases which flow into said reforming means.

2. An exhaust gas purifying apparatus according to claim 1, wherein said reforming means is a reforming catalyst.

3. An exhaust gas purifying apparatus according to claim 1, wherein said reforming means is a partial oxidation catalyst.

4. An exhaust gas purifying apparatus according to claim 3, wherein said reforming means contains at least rhodium.

5. An exhaust gas purifying apparatus according to claim 1, wherein said reforming means is a three-way catalyst.
